# EUROPÄISCHE PATENTSCHRIFT

(11) **EP 1 449 391 B1**
(45) Veröffentlichungstag und Bekanntmachung des Hinweises auf die Patenterteilung: **13.08.2008**
(21) Anmeldenummer: 02788257.0
(22) Anmeldetag: 27.11.2002
(51) Int. Cl.: H04Q 7/38

(54) **VERFAHREN FÜR EIN ALTERNATIVES MOBILFUNKSYSTEM UND -DIENSTLEISTUNGEN**
METHOD FOR OPERATING AN ALTERNATIVE MOBILE TELECOMMUNICATIONS SYSTEM AND FOR PROVIDING SERVICES
PROCEDE DE MISE EN OEUVRE D'UN SYSTEME DE TELECOMMUNICATION MOBILE DE RESERVE ET DE PRESTATIONS DE SERVICES

(30) Priorität: 29.11.2001 DE 10158404
(43) Veröffentlichungstag der Anmeldung: 25.08.2004
(73) Patentinhaber: Pal, Zoltan, 71672 Marbach am Neckar (DE)
(72) Erfinder: Pal, Zoltan, 71672 Marbach am Neckar (DE)
(86) Internationale Anmeldenummer: PCT/HU2002/000131
(87) Internationale Veröffentlichungsnummer: WO 2003/047283

(56) Entgegenhaltungen:
- EP-A- 0 752 793
- WO-A-94/11849
- WO-A-96/25828
- WO-A-99/14962
- DE-A- 10 016 622
- US-B- 6 061 650
- XP008026638

## Beschreibung

Gegenstand der Erfindung ist eine alternative Mobil-Telekommunikation und ein System zur elektronischen Bestellung und Bedienung bei Telekommunikationsverfahren. Dabei werden Kommunikation, Bestellung und Bezahlung von Waren und/oder Dienstleistungen direkt über ein drahtloses Local Area Netzwerk (LAN) vor Ort bzw. mit den drahtlosen Telekommunikations-Endgeräten der Kunden abgewickelt, die mit den LANs eines Anbieters kommunizieren.

Nach dem Stand der Technik gibt es mehrere Lösungen für die Steuerung von Verkaufsautomaten durch Mobil-Telefone. Eine dieser Lösungen ist in der WO 97/45814 beschrieben. Bei dem Verfahren ruft der Käufer entweder den Verkaufsautomaten direkt, z. B. einen Automat für den Verkauf von Busfahrkarten, einen Automat für das Auftanken mit Benzin oder einen Automat für den Kaffeeverkauf, oder alternativ ein Service-Zentrum an, um die Waren des Automaten auszuwählen. Es wird zuerst die Kaufberechtigung des Käufers im Zentrum überprüft, dann wird der Gegenwert der beim Automat ausgewählten Ware zum Zentrum übermittelt und die Rechnung wird im Zentrum ausgestellt.

In der ungarischen Patentschrift HU 220728 ist ein mit Handy-Telefon gesteuertes Verfahren zur Aufladung eines elektronischen Zahlungsmittels und zur Steuerung des Geldumlaufs beschrieben, welches vorzugsweise für die Abwicklung von finanziellen Transaktionen geeignet ist. Bei dem beschriebenen Verfahren wird das Geld ohne tatsächliche Benutzung der Bankkarte oder Kreditkarte mit den aus einem Mobil-Telefon gesandten elektronischen Befehlen auf ein beliebiges Zahlungsmittel wie bspw. eine Telefonkarte übermittelt, so dass damit bezahlt werden kann.

Eine bekannte Anwendung der drahtlosen Telefontechnologie war Telepoint, wo man versucht hat, die öffentlichen Telefonzellen mit drahtlosen Lösungen zu ergänzen. Da die damaligen Techniken, bspw. ohne Roaming, noch recht unausgereift waren und die Kosten/Nutzen-Verhältnisse nicht günstig genug waren, konnten sich Telepoint auf dem Markt nicht durchsetzen.

Eine andere bekannte Anwendung ist die Kombination eines GSM-Mobiltelefons mit einem DECT-Heimfunktelefon, wobei aber nur der GSM-Mobiltelefon tatsächlich mobil verwendbar ist, während das DECT-Heimfunktelefon genauso wie bei allen anderen Heimfunktelefonen nur und ausschließlich in den angemeldeten Heim-oder Geschäftsnetzwerken benutzt werden kann. Das beschriebene Verfahren kann nicht mit beliebigen anderen Heimfunktelefonen mit freien Frequenzen arbeiten bzw. von unterwegs an sämtlichen angeschlossenen Heimfunktelefon-Basisstationen benutzt werden.

Nach dem Stand der Technik gibt es mehrere Lösungen, mit denen man sich an Festnetze mittels Technologien wie BLUETOOTH, Civil Band Radio, DECT, DMAP, H-RF, IrDA, W-LAN oder anderen Technologien innerhalb einer Entfernung von 50 bis 500 m drahtlos anschließen kann. Diese Systeme haben die vorteilhaften Eigenschaften, dass die Sprachqualität sehr gut ist, die Bandbreite der Übertragung groß ist und auch deren Benutzung kostengünstig ist. Diese Lösungen haben jedoch den Nachteil, dass sie nicht überall zur Verfügung stehen, denn sie funktionieren nur mit den am Gerät oder am Zentralgerät registrierten Benutzern. D. h. sie können von fremden oder nicht registrierten Benutzern nicht benutzt werden, weil die Kosten ausschließlich anschlussabhängig ermittelt werden.

Nach dem Stand der Technik sind viele Mobiltelefonnetze wie GSM oder UMTS bekannt, die den Vorteil haben, dass sie immer, überall und jeder Zeit verfügbar sind. Die Nachteile dieser Systeme sind, dass sie teuerer und anspruchsvoller Infrastruktur bedürfen und in den Leitungsnetzen Qualität und Bandbreite fehlen. Diese Systeme haben einen weiteren Nachteil, dass die ausgestrahlte Leistung und der sich dadurch ergebende elektrische Smog zu hoch ist, der die Umgebung und die lebenden Organismen unnötig belastet. Deswegen ist es notwendig, die Kommunikation mit Radiowellen in den lokalen Bereichen bei möglichst kurzen Übertragungsstrecken und mit der möglichst niedrigen Belastung für die Umgebung zu leisten.

Nach dem Stand der Technik sind weiterhin als Breitbandschnittstellen so genannte "HOT SPOTs" bekannt, wobei sich der Benutzer drahtlos an den Schnittstellen von Internet-Dienstleistungszentren anschließen kann. Der Benutzer meldet sich dabei an und bestätigt seine Identität durch Benutzername und Kodewort und erhält dann den Zugriff zum Internet. Der Benutzer bezahlt für den Internet-Zugriff an den HOT SPOT-Dienstleister.

Der Nachteil bei derartigen Systemen besteht darin, dass heute zu wenig HOT SPOT-Zugangspunkte existieren, so dass die Möglichkeiten des Systems nur unvollständig genutzt werden können. Die Zugangspunkte werden heute nur für Benutzung des Internets und für Senden und Empfangen von E-Mails benutzt und nicht zur direkten Kommunikation zwischen Anbieter und Kunde, um einen einfachen und guten Informationsfluss zwischen Anbieter und Kunde zu gewährleisten.

Ein weiterer Nachteil bei den existierenden Hotspots ist die umständliche Anmeldung mit Benutzername und PIN, so dass dieser Dienst nicht so einfach funktioniert, wie z.B. bei den GSM Netzen.

Die XP008026638, "want a Soda?..." Sun - Sentinel, 12.5.2000, beschreibt ein Verfahren, um mit dem Mobiltelefon aus einem Automaten ein Product zu kaufen.

Aus der US-A-6 061 650 ist ein Verfahren zur Authentifizierung bei Telekommunikationsanwendungen bekannt. Dabei werden Knoten mit Mobilfunktionalität beim Telekommunikationsnetzwerk eines Service-Providers angemeldet und auf Authentizität geprüft. Beispielsweise wird dabei ein mobiles Endgerät an einen Computer über eine Luftschnittstelle angekoppelt und die Datenpakete des mobilen Endgerätes werden von dem Computer über das Heimnetzwerk an den Service-Provider übermittelt. Auf dem Computer werden die Datenpakete in das Protokoll des Heimnetzwerks mittels eines Computer-Gateways umgesetzt. Dadurch werden die Datenpakete des mobilen Endgerätes bspw. innerhalb des IP-Protokolls an den Internet-Service-Provider übermittelt. Das Heimnetzwerk kann ein ISDN- oder PSTN-Netwerk sein. Das mobile Endgerät ist typischerweise ein portabler Computer, welcher als Remote Access Server (RAS) über ein Link Control Protokoll (LCP) einwählt. Die Entgegenhaltung befasst sich nicht mit DECT- oder GSM-Verbindungen bei Mobiltelefonen bzw. mit deren Abrechnung.

Die WO 94/11849 A beschreibt ein Verfahren zur Erzeugung von sicheren Telefonverbindung bspw. zur Bezahlung von Rechnungen bei Einkäufen. Bei GSM-Telefonen wird dabei die SIM-Karte und deren Parameter verwendet, um eine Sicherheitsdatenverbindung zu erzeugen. Mit Hilfe der Daten auf der SIM-Karte wird der Benutzer authentifiziert und gegenüber dem Service-Provider identifiziert.

Die WO 99/14962 A befasst sich mit der Zugriffsberechtigung bei DECT-Basisstationen. Es wird dabei unterschieden in fest angemeldete private Endgeräte und in Endgeräte mit öffentlicher Zugangsberechtigung. Letztere können sich an die DECT-Basisstation anmelden und können dort angemeldet werden, indem Informationen über die Zugangsberechtigung über die Netzschnittstellen abgerufen werden und an die Telekommunikationsgeräte weitergegeben werden. Hierbei ist vorgesehen, dass die Zugriffsberechtigung für DECT-Endgeräte bezüglich DECT-Basisstationen erfolgt. In einem anderen davon unabhängigen Beispiel werden die Zugangsberechtigungen von unterschiedlichen GSM-Mobilteilen bei GSM-Basisstationen beschrieben. Eine gegenseitige Vermischung der Protokolle wird nirgends nahe gelegt.

Die DE 100 166 22 A beschreibt ein Verfahren zum Steuern von Leistungsmerkmalen in einem Funknetz. In Figur 4 ist dort ein Funknetz dargestellt, welches aus mehreren DECT-Basisstationen aufgebaut ist. Neben den DECT-Endgeräten können sich dort GSM-Engeräte einwählen und zwar indirekt über Bluetooth-Protokoll zu einem DECT-Repeater und von dort zur DECT-Basisstation. GEmäß Offenbarung ist das indirekte Einwählen über Bluetooth in das DECT-Funknetz in der Regel kostengünstiger als die direkte Anbindung, da sich Bluetooth-Baugruppen mit wesentlich geringerem Aufwand in ein GSM-Endgerät integrieren lässt, als eine für direkte Anbindung erforderliche DECT-Baugruppe. Bei einer Sprachverbindung werden dann die GSM-Nutzsignalkodierungen in Bluetooth-Nutzsignale und von dort in DECT-Nutzsignale umgesetzt. Die Offenbarung ist bei allen Ausführungsbeispielen darauf gerichtet, dass von DECT- oder GSM- in ein Bluetooth-Protokoll umgesetzt wird. Wegen der geringen Reichweite des Bluetooth-Standards ist diese Übertragungsart aber nicht für alle Anwendungen geeignet.

Es ist Aufgabe der vorliegenden Erfindung, ein alternatives System und ein alternatives Verfahren für den elektronischen Einkauf, die Bestellung und die Durchführung von Dienstleistungen mittels eines geeigneten Telekommunikationssystem vorzusehen, das ähnlich wie Mobiltelefon-Netzwerke arbeitet und den Benutzern ermöglicht, sich ggf. ohne Anmeldung an ein lokales drahtloses Netzwerk anzuschließen. Weiterhin sollen über diese alternative Telefon- oder Datenverbindung mittels eines lokalen drahtlosen Netzwerk Waren gekauft und bezahlt werden.

Die Aufgabe wird gemäß den Merkmalen des Anspruchs 1 gelöst. Vorteilhafte Ausgestaltungen werden in den Ansprüchen 2-9 beschrieben.

Es ist erkannt worden, dass das alternative Mobil-Telekommunikationssystem verwirklicht werden kann, wenn der Benutzer mit oder ohne Anmeldung/Registrierung einen bidirektionalen Kommunikationskanal im lokalen Netzwerk (LAN) erhält, indem er an die private Basisstationen angeschlossen wird. Dadurch wird das lokale Netzwerk für den nicht registrierten Benutzer mit einer manuellen oder automatischen Anmeldung geöffnet und der Benutzer erhält einen Zugriff zu dem Netzwerk (PTSN), so dass der Benutzer ein Telefongespräch und/oder eine Datenübertragung mittels dieses Endgeräts zur Telekommunikation (CTT) sogar ohne Registrierung durchführen kann. Er bezahlt dabei die Gebühr für Benutzung des Telekommunikationssystems über das lokale Netzwerk (LAN) auf ein Konto oder auf ein anderes Konto, das aus dem lokalen Netz über Leitungen eines PSTN-Netzwerks verfügbar ist.

Bei einer Weiterbildung des Telekommunikationsverfahren kann das lokale Netzwerk (LAN) für den Benutzer mittels einer automatischen Anmeldung und Identifikation geöffnet werden und der Benutzer erhält dadurch einen Zugriff auch zu einem Several Digital Line-Netzwerk (SDL) und vollbringt ein Telefongespräch und/oder Datenübertragung mittels des Endgeräts zur Telekommunikation (CTT). Der im lokalen Netz (LAN) nicht registrierte Benutzer bezahlt die Gebühr für Benutzung des Telekommunikationssystems entweder aus einem im lokalen regionalen Netz (LAN) geführten Konto oder aus einem außerhalb des LANs geführten Konto, das aus dem lokalen Netz (LAN) über das SDL-Netzwerk verfügbar ist.

Das alternative Mobil-Telekommunikationsverfahren kann als mobiles und elektronisches Kaufsystem verwendet werden, wenn der Käufer sich lokal entweder automatisch oder manuell mit einem individuellen Gerät (CTT) ins lokale Netzwerk des Verkäufers oder des Dienstleistungsbetriebes (LAN) anmeldet. Das lokale Netzwerk (LAN) wird mittels dieser Anmeldung für den Benutzer geöffnet und der Benutzer erhält dadurch einen Kommunikationskanal für Gegensprechverkehr im lokalen Netzwerk, der ihn entweder mit dem Verkäufer oder mit dem Dienstleistungsbetrieb verbindet. Der Benutzer sendet eine Bestellung für den Kauf einer Ware oder für eine Dienstleistung durch diesen Kanal, die vom Verkäufer oder Dienstleistungsbetrieb mit dem Hinweis auf den Preis über den Kommunikationskanal für Gegensprechverkehr im lokalen Netzwerk (LAN) bestätigt wird. Der Benutzer bestätigt die Bestellung vorzugsweise über das lokale Netzwerk (LAN), falls er das Angebot annimmt, und überweist das Entgelt für den Kauf oder für die Dienstleistung entweder aus einem im lokalen Netzwerk (LAN) geführten Konto oder aus einem anderen Konto, das aus dem lokalen Netzwerk (LAN) über ein SDL-Netzwerk verfügbar ist. Danach gibt der Verkäufer die Ware aus oder der Dienstleistungsbetrieb führt die bestellte Dienstleistung durch. Das System eignet sich sogar für die Verkürzung der langen Wartezeiten oder des Schlangestehens, so dass diese Zeit durch Kommunikation genutzt werden kann.

Bei dem alternativen Mobil-Telekommunikationssystem bzw. -verfahren können die bekannten und vorhandenen DECT-Endgeräte oder DMAP-Endgeräte mit GAP zur Telekommunikation verwendet werden. Diese Geräte können üblicherweise nur mit den Basisstationen kommunizieren, an denen sie angemeldet sind. Die Leistungsmerkmale der erfindungsgemäße Basisstationen beim alternativen Verfahren sind, dass diese mit geeigneter Software, Hardware und/oder Konfiguration so erzeugt bzw. ausgestattet werden, dass die erwähnten Endgeräte mit einer Vermittlungszentrale innerhalb oder außerhalb des Hauses Zwecks Identifikation, Verbindung oder Abrechnung manuell oder automatisch verbunden werden zu können.

Veiterhin wird ein Verfahren zur Erzeugung eines alternativen Mobil-Telekommunikationssystem beschrieben, wobei die Benutzer sich bei einer drahtlosen AMTSD (Alternative Mobile Telecommunication Device)- Basisstation, einem AMTSD-Zugangspunkt oder einem AMTSD-Sendeempfänger manuell oder automatisch anmeldet. Diese sind am Ende der traditionellen analogen Telefonleitungen oder ISDN- oder DSL- Leitungen montiert, an diese angeschlossen oder angepasst und mit geeigneter Software versehen. Diese Schnittstellen, Basisstationen oder Zugangspunkten können in den Wohnungen, Geschäftsbetrieben, Geschäften, Gaststätten oder in anderen beliebigen privaten und/oder öffentlichen Räumen eingerichtet werden. Die Benutzer, die an den aktuellen Orten entweder eingebucht, registriert, eingeschrieben, eingetragen oder auch nicht eingebucht sind, können sich mit den Endgeräten bei den Basisstationen, wie CTT- und/oder AMTSD-Basisstationen, oder durch diese AMTSD-Basisstationen mit den verbundenen öffentlichen Netzen entweder bei den damit verbundenen LAN oder den Servern anmelden. Sie werden in den Netzwerken entweder manuell oder automatisch identifiziert, je nach Bedarf mit dem mobilen oder immobilen Teilnehmer oder Netzwerken leitungsvermittelt oder packetorientiert (VoIP) verbunden. Die Rechnungen werden den Waren oder den Dienstleistungen entsprechend auf die Weise geführt, dass alle Benutzer und ihre Rechnungen anschlussunabhängig, bzw. benutzerabhängig innerhalb oder außerhalb des LAN identifiziert bzw. die Konten geführt und abgerechnet werden. Die Erfindung stellt weiterhin ein Verfahren zur Erzeugung eines alternativen Mobil-Telekommunikationssystems zur Verfügung, das es dem Benutzer ermöglicht, sich mit dem Endgerät (CTT) mit einem traditionellen, leitungsvermittelten Telefonnetz (PSTN) durch Wählscheibe oder Nummerauswahl zu verbinden. Der Benutzer meldet sich an dem Endgerät (CTT) bei dem drahtlosen lokalen Netzwerk (LAN) an. Dadurch erhält der auf der Basisstation oder dem System nicht registrierte Benutzer im lokalen Netzwerk (LAN) einen bidirektionalen Kommunikationskanal und das lokale Netzwerk (LAN) wird mit einer manuellen oder automatischen Anmeldung für den darin sonst nicht registrierten Benutzer geöffnet. Der dort nicht registrierte Benutzer erhält dadurch einen Zugang über das Netzwerk (PSTN) und er kann ein Telefongespräch und/oder eine Datenübertragung mit dem Endgerät der Telekommunikation (CTT) ausführen. Er bezahlt die Gebühr für die Benutzung des Telekommunikationssystems entweder von einem im lokalen regionalen Netzwerk (LAN) oder außerhalb des LANs geführten Konto oder von dem Wertspeicherchip, der aus dem lokalen Netzwerk (LAN) verfügbar ist.

Bei einer vorteilhaften Ausführung des Verfahrens wird das drahtlose lokale Netzwerk (LAN) an Leitungen des Telefonnetzes (PSTN) durch ein lokales Zentrum (PBX) angeschlossen. Bei einer anderen vorteilhaften, zweckmäßigen Ausführung des Verfahrens wird die Anmeldung entweder manuell oder automatisch mit dem Endgerät der Telekommunikation (CTT) durchgeführt. Die automatische Anmeldung und Identifikation kann gegebenenfalls aufgrund einer SIM-Karte oder Mac- Adresse durchgeführt werden. Es kann aber jedes andere Verfahren, gegebenenfalls sogar ein Voice-Control-Verfahren angewendet werden.

Bei einer weiteren vorteilhaften Ausführung des Verfahrens, insbesondere im Falle einer mit einem Mobiltelefon durchgeführten ISDN-Dienstleistung, können die einzelne CTT-Endgeräte in einem entweder innerhalb oder außerhalb des Netzwerkes befindlichen zentralen Register eingetragen werden. Wenn dann ein Anruf eingeht, wird der Benutzer im lokalen/regionalen Netzwerk gesucht und der Anruf wird zu dem Benutzer geleitet.

Es wird weiterhin ein Verfahren für ein alternatives Mobil-Telekommunikationssystem offenbart, wobei sich der Benutzer mit dem Endgerät zur Telekommunikation (CTT) über das drahtlose lokale Netzwerk (LAN) an ein Netzwerk mit der Betriebsart der Paketsendung anschließt, der Benutzer sich mit dem Endgerät (CTT) ins lokale regionale Netzwerk (LAN) anmeldet und der Benutzer einen Kommunikationskanal für Gegensprechverkehr innerhalb des lokalen Netzwerks erhält. Dadurch wird das lokale Netzwerk (LAN) mit einer automatischen Anmeldung und Identifikation für den Benutzer geöffnet und dadurch erhält der Benutzer zugleich einen Zugriff zu einem SDL-Netzwerk. Der Benutzer führt entweder ein Telefongespräch und/oder eine Datenübertragung durch und der im lokalen Netzwerk nicht einregistrierte Benutzer bezahlt die Gebühr für Benutzung des Kommunikationssystems aus einem im lokalen regionalen Netzwerk (LAN) geführten Konto oder aus einem anderen Konto, das aus dem lokalen Netzwerk (LAN) verfügbar ist.

Bei einer weiteren vorteilhaften Ausführung des Verfahrens wird das drahtlose lokale Netzwerk an ein mit Paketsendung arbeitendes SDL-Netzwerk über eine als lokale Zugangsstelle (AMTS AP) wirkenden Server (SERV) angeschlossen. In einer anderen vorteilhaft zweckmäßigen Ausführung des Verfahrens wird die Anmeldung entweder manuell oder automatisch mit dem Endgerät der Telekommunikation (CTT) durchgeführt. Die automatische Anmeldung und Identifikation kann gegebenenfalls aufgrund einer SIM-Karte oder MAC-Adress durchgeführt werden. Es kann aber jedes andere Verfahren, gegebenenfalls sogar ein Voice-Control-Verfahren angewendet werden.

Bei einer weiteren vorteilhaften Ausführung des Verfahrens, insbesondere im Falle einer mit einem Mobiltelefon durchgeführten ISDN-Dienstleistung, können die einzelnen CTT-Endgeräte in einem entweder innerhalb oder außerhalb des Netzwerkes befindlichen zentralen Register eingetragen werden. Geht ein Anruf ein, wird der Benutzer im lokalen/ regionalen Netzwerk gesucht und der Anruf wird zu ihm geleitet.

Es wird darüber hinaus ein Verfahren zur Erzeugung eines alternativen Mobil-Telekommunikationssystems für Einkauf, Bestellung und Bedienung bereitgestellt. Während des Verfahrens wird das Endgerät für Telekommunikation (CTT), das beim Benutzer befindlich ist, an das drahtlose lokale Netzwerk (LAN) angeschlossen. Der Benutzer meldet sich mit dem Endgerät für Telekommunikation (CTT) bei dem lokalen Netzwerk an, wobei der Benutzer sich an Ort und Stelle manuell oder automatisch bei dem lokalen Netzwerk (LAN) des Verkäufers oder des Dienstleistungsbetriebes anmeldet. Das lokale Netzwerk wird mittels der Anmeldung für den Benutzer geöffnet und der Benutzer erhält einen Kommunikationskanal für Gegensprechverkehr zum Verkäufer oder zum Dienstleistungsbetrieb. Der Benutzer sendet eine Bestellung für den Kauf einer Ware oder für eine Dienstleistung, die der Verkäufer oder der Dienstleistungsbetrieb mit Benennung des Preises durch den gleichen Kanal bestätigt. Der Benutzer bestätigt die Bestellung vorteilhaft durch den gleichen Kanal innerhalb des lokalen Netzwerkes (LAN), falls er den Preis akzeptiert. Der Benutzer überweist das Entgelt für den Kauf oder für die Dienstleistung entweder von einem innerhalb des lokalen Netzwerk (LAN) geführten Konto oder von einem von einem über das lokalen Netzwerk verfügbaren äußeren Konto. Der Verkäufer sendet die Ware oder der Dienstleistungsbetrieb führt dann die Dienstleistung durch.

Bei einer der vorteilhaft Ausführungen des Verfahrens ist das mit Leitungen wirkende SDL-Netzwerk ausgehend von dem lokalen Netzwerk durch eine eingeschaltete analoge Linie, durch eine digitale ISDN-Linie, digitale DSL- oder SDL-Linie erreichbar.

Bei einer weiteren vorteilhaften Ausführung des Verfahrens wird die Verbindung mit einem Verkäufer oder Dienstleistungsbetrieb während der Bestellung aus dem lokalen Netzwerk (LAN) ausgehend durch das lokale Netzwerk (LAN) und durch ein mit Leitungen wirkendes SDL-Netzwerk vermittelt.

Bei einer weiteren vorteilhaften Ausführung des Verfahrens kann der Benutzer seine Bestellung oder Bedienung durch das Verfahren durchführen lassen, indem er mit seinem CTT-Browser sprechen oder eine Kode eingeben kann, der davon abhängig ist, was er bestellen, kaufen, bedienen lassen oder welche Dienstleistung er in Anspruch nehmen möchte. Der Benutzer kann dabei auch eine Information bekommen oder bzgl. einer Ware identifiziert, autorisiert werden oder es kann bei einem Tiketverkauf das Ticket digital zugeschickt werden oder ein Einlasssystem kann benutzt werden.

Bei einer weiteren vorteilhaften Ausführung des Verfahrens kann das CTT (Cordless Telecommunication Terminal)-Endgerät des Benutzers mit ein Standby-Programm versehen sein, damit er in dem Netzwerk jederzeit lokalisierbar und anrufbar ist. Ein solches vorteilhaftes Kommunikationsprogramm befähigt das CTT-Endgerät über die AMTS AP (Alternativ Mobile Telekommunikation System Access Points)-Zugangspunkten mit einer zentralen Steuerungs-, Verwaltungs- und Betriebssystem-Einheit zu kommunizieren, so dass dadurch die Erreichbarkeit und Telefonierbarkeit im Netz möglich ist, so wie es bei den GSM-Netzen der Fall ist.

Das Verfahren kann als ein Station-Sharing-System (SSS) ausgeführt wein, in dem der Anschluss zur vorübergehenden Nutzungsüberlassung oder als Tauschsystem vorgesehen ist. Dabei kann eine Festnetznummer bei allen zu dem System angeschlossenen Ländern erreichbar sein und über unseren Festnetzanschluss belastend abgerechnet werden.

Das Verfahren kann einen mobilen VoIP-Servicebereitstellen, in dem sich die CTT-Endgeräte in einem W-LAN (Wireless Local Area Network) als fremde Benutzer anmelden und in dem LAN oder außerhalb des LANs verwaltet und registriert werden, damit bei einem eventuellen Anruf der Benutzer gefunden und verbunden werden kann. Während der Verbindung können die leitungsvermittelten und VoIP-Verfahren vorteilhaft beliebig gewechselt werden.

Das Verfahren kann, wenn der Benutzer über das Internet ein Zeichen oder Signal schickt, für den Internet-Service-Provider oder beliebige andere Telekommunikationsprovider erreichbar sein, wenn er die gewünschte oder mehrere Telefonnummern angibt, mit welchen er verbunden werden möchte. Weiterhin kann er auch automatisch oder manuell seine Erreichbarkeit mitteilen und der Provider kann die gewünschten Verbindungen entweder VoIP-vermittelt oder leitungsvermittelt oder vorteilhaft abwechselnd durchführen und dem Teilnehmer im LAN werden die Verbindungen und Anrufe weitergeleitet.

Das Verfahren kann, wenn der Benutzer über LAN und über die an das LAN angeschlossenen Netzwerke, seinen Nachrichtenserver mit CTT-Endgeräten ständig aktualisierend abfragen, wie es bei Blackberry im GPRS der Fall ist.

Das Verfahren kann das CTT-Endgerät des Benutzers vollautomatisch programmgesteuert in die LANs bzw. WLANs anmelden, einbuchen und sich identifizieren, genauso wie es bei den GSM-Handys und -Netzen der Fall ist.

Das Verfahren kann, wenn der Benutzer sein GSM- oder UMTS-Handy mit zusätzlichen freien Frequenzen kombiniert, alle bekannte GSM- und/oder UMTS-Leistungsmerkmale auch mit den lizenzfreien Frequenzen in den beliebigen WLANs nutzen, wo sämtliche Daten oder Sprachaktivitäten durchgeführt werden können.

Das Verfahren kann, wenn der Benutzer sein GSM- oder UMTS-Handy mit einem Frequenzkonverter verbindet, die GSM-Sendungen konvertieren und sämtliche GSM- und oder UMTS-Leistungsmerkmale im WLAN mit beliebigen WLAN-Frequenzen, wie Bluetooth, DECT, DMAP, H-RF, oder IEEE 802.11/x WLAN durchführen.

Das Verfahren kann, wenn der Benutzer ein einfaches Headset benutzt, als ein CTT-Endgerät eingesetzt werden, welches sich über die AMTS AP mit den in die LANs integrierten Telefonteile verbindet, um sich dann mit einfachen Sprachbefehlen an dem Voice-Portal mit Voicedial-Programmen oder Voiceorder-Programmen bedienen zu lassen. Die Identifikation könnte in diesem Fall über MAC-Adressen und/oder Sprachen-Authentifikationsprogramme erfolgen.

Das Verfahren kann mit durch Super Thin Technology (STT) durch Drucken oder Falten hergestellte einfache Basis- und/oder Mobilteile verwendet werden, welche durch ihre niedrigen Preise die schnelle Verbreitung von verkauften Prepaid-Telefonkarten ermöglicht, welche gleichzeitig auch CTT-Endgeräte sein könnten.

Die Verfahren werden weiterhin mit den beigefügten Zeichnungen erklärt.
- Fig. 1: zeigt das Telekommunikationsverfahren, bei dem die Abrechnung außerhalb des LANs erfolgt,
- Fig. 2: zeigt das Telekommunikationsverfahren, bei dem die Abrechnung innerhalb des LANs erfolgt,
- Fig. 3: zeigt das Telekommunikationsverfahren, bei dem die Anmeldung im LAN, die Identifikation und Abrechnung automatisch erfolgen,
- Fig. 4: zeigt das Telekommunikationsverfahren zum Wareneinkauf bzw. zur Dienstleistung für Bestellung und für Bedienung und
- Fig. 5: zeigt das Telekommunikationsverfahren zum Wareneinkauf bzw. zur Dienstleistung für Bestellung und Bedienung bei einer mit einem Hotspot kombinierten Variante.

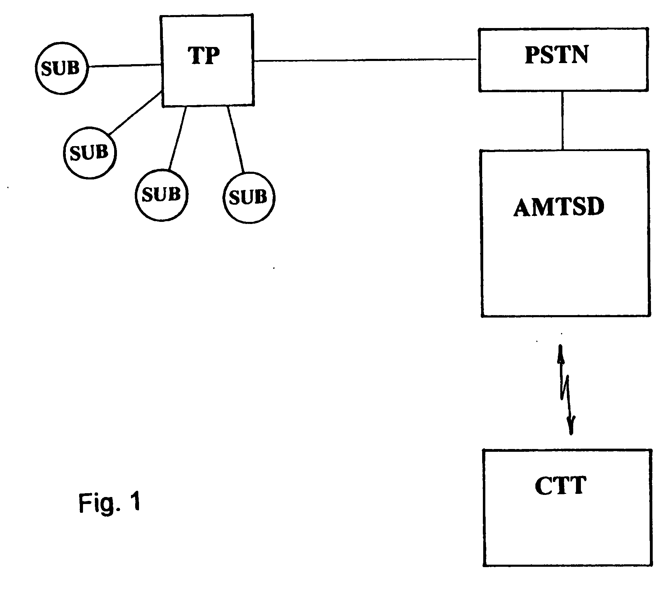

Die Fig. 1 zeigt das Telekommunikationsverfahren, bei dem die Abrechnung außerhalb des LANs über den Telekommunikations-Provider (AMTS TP) erfolgt. Der im LAN nicht registrierte Benutzer kann sich mit seinem CTT-Endgerät, welches in diesem Fall ein einfaches DECT-Heimfunktelefon ist oder auch ein mit beliebigen anderen Frequenzen arbeitendes Geräte sein kann, welches immer und ausschließlich nur in den Heimfunknetzen angemeldet arbeitetet, jetzt auch in einem fremden LAN eines Gastgebers anmelden. Dies erfolgt auf den von den Geräten erreichbaren AMTSD-Basisstationen. Dementsprechend wird einem dort nicht registrierten Benutzer ein bidirektionaler Kommunikationskanal durch manuelles oder automatisches Einbuchen in das lokale Netzwerk geöffnet, wobei er über ein leitungsvermitteltes Public Switched Telekom Network (PSTN) bis zu dem Telekommunikation Provider (TP) gratis Zugang bekommt.

Damit aber dieser Zugang wirklich gratis ist, d.h. keine Kosten verursacht, kann entweder direkt über einen Direkt-Komplettanschluss zu einem AMTS-Telecommunication Provider (TP) geschaltet werden, der Call by Call, Call Through oder Pre Selection-Modus oder nur ausschließlich über 0800-er Nummern eine Gratis-Nummer zulässt, damit der Anwender bis zu dem Provider ganz sicher kostenlos bleibt, so dass dem Inhaber der überlassenen TAE-Telekommunikationsanschlusseinheit keinerlei kosten bzw. Nachteile entstehen. Die Kosten für die Benutzung des Telekommunikationssystems kann der Benutzer über ein über das lokale Netzwerk LAN erreichbare Guthabenkonto begleichen. Der System bzw. der Telekommunikation Provider (TP) identifiziert den Anwender und prüft seine Zahlungsfähigkeiten und wenn die ausreichend sind, dann bekommt er Zugang zu den leitungvermittelten PSTN-Netzen, worüber dann der gewünschte Teilnehmer(Subscriber/SUB) erreicht werden kann und ein Telefongespräch und/oder auch Datenverkehr abwickelt werden kann. Hier muss auch noch erwähnt werden, dass der Anschlussinhaber aber auch weiterhin Priorität über seine eigene Anlage genießt, welche wenn es sein muss, das Gespräch abbricht oder an eine benachbarte TAE mit Roaming und handover-Verfahren weitergibt.

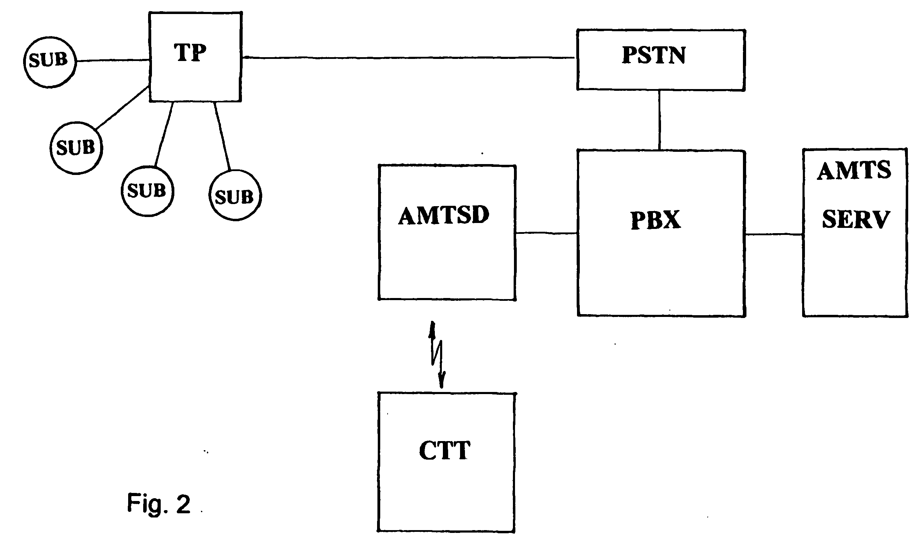

Die Fig. 2 zeigt das Telekommunikationsverfahren, bei dem die Abrechnung innerhalb des LANs erfolgt, in dem der Benutzer mit seinem CTT sich in das besuchten Netz über die AMTSD-Basisstation einbucht. Der in dem LAN nicht registrierte Benutzer bekommt einen bidirektionale Kommunikationskanal bis zu der Telekommunikationsnebenstellenanlage (PBX) oder deren Aufgaben ausführenden Server (AMTS SERV). Dort bucht er sich manuell oder automatisch ein, identifiziert sich und bekommt entweder direkt über ein in dem LAN geführtes Konto oder über bekannte Verfahren oder über ein im WLAN geführtes Konto Zugang, wo seine Zahlungsfähigkeit geprüft und die Zahlung für die in Anspruch genommenen Waren oder Dienstleistungen abgebucht bzw. abgewickelt werden.

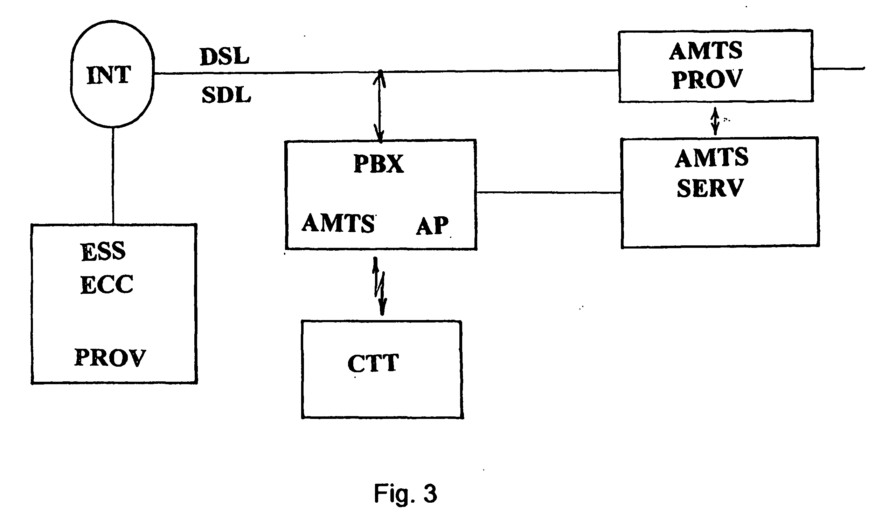

Figur 3 zeigt das Telekommunikationsverfahren, bei dem die Anmeldung, die Identifikation und die Abrechnung im LAN automatisch erfolgen, indem sich der Benutzer mit seinem Cordless Telecommunication Terminal (CTT) in beliebige LANs der Anbieter einbucht bzw. über das LAN an beliebige (Several Digital Line- (SDL), Digital Subscriber Line- (DSL) Netze kommt. Es könnte auch eine ISDN-Leitung verwendet sein. Im Gegensatz zu den heute bekannten Hotspots, wo sich der Benutzer nur mit Angabe des Username und PIN-Code manuell einwählen kann, erfolgt beim Verfahren die Einwahl automatisch, wobei die automatische Identifikation und das Einbuchen auch mit einem mit dem LAN verbundenen AMTS-Provider oder im Internet beliebig erfolgen kann.

Mit der automatischen Anmeldung, der Einbuchung und Identifikation wird der LAN für dem fremden Benutzer geöffnet, vorteilhaft mit SIM-Card (Subscriber Identifikation Modul), genauso wie es bei den GSM-Mobilfunknetzen angewendet wird. Alternativ können auch MAC-Adressen oder beliebige andere elektronisch gespeicherte Codes, Signaturen oder andere die Identifikation und Autorisierung ermöglichende Verfahren eingesetzt werden.

Mit diesen kombinierten Maßnahmen sind wir in der Lage mit den einfachen Public Hot Spots und beliebigen anderen privaten Basisstationen oder Access Points (BS bzw. AP) unser vollwertiges Mobiles Virtuelles Privates Network (MVPN) zu schaffen, um dann damit die verschiedenste Elektronik Credit Cards (ECC) und/oder Electronic Several Services (ESS) der verschiedensten Provider realisieren zu können.

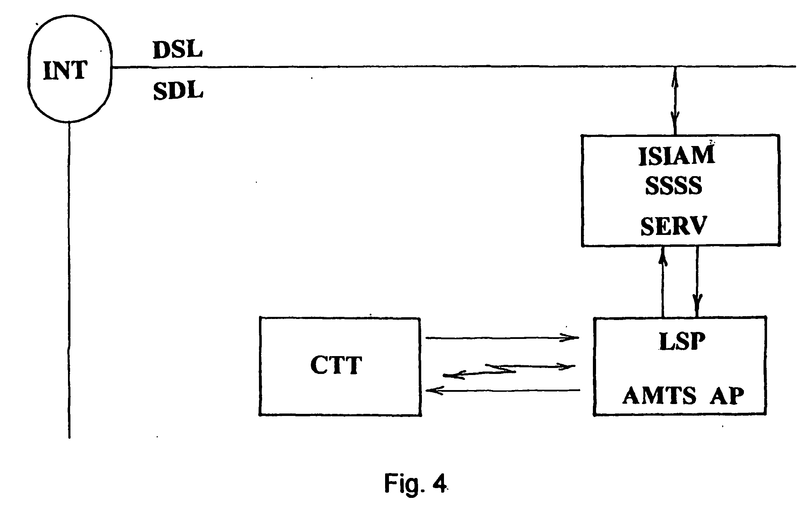

Figur 4 zeigt das Telekommunikationsverfahren zum Wareneinkauf bzw. Dienstleistung für Bestell- und Bedienungsverfahren, indem sich der Benutzer mit seinem CTT bei dem Local Services Provider (LSP) entweder automatisch oder manuell einbucht, um dann im Rahmen des Internet Services Integrated Aided and Motivated (ISIAM) oder des Server Selling Services Systems (SSSS) benutzen kann.

Die Bestellung und Bedienung der Ware kann entweder direkt von dem auf dem CTT gespeicherten Werten oder nachdem der Kunde seine Zahlungsfähigkeit/Zahlungswilligkeit bekundet hat erfolgen. Die Bestellung erfolgt entweder im LAN des Anbieters oder über ein zwischengeschaltetes DSL- oder SDL-Netzwerk.

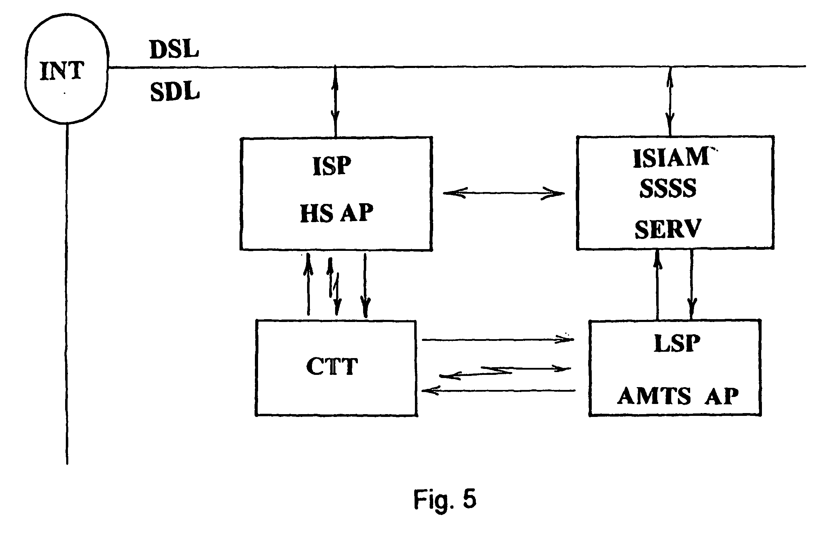

Figur 5 zeigt das Telekommunikationsverfahren zum Wareneinkauf bzw. zur Dienstleistung für Bestell- und Bedienungsverfahren bei einer mit einem Hotspot kombinierten Variante, wobei der Kunde wählen kann, ob er sich direkt beim Local Services Provider (LSP) einbucht/anmeldet und die Transaktion direkt bei dem Local Services Provider (LSP) in seinem LAN abwickelt, oder ob er über den vorhandenen Hotspot-Zugang eines Internet Services Providers (ISP) diese abwickelt, wobei es dann von Vorteil ist, wenn zwischen dem ISP und dem LSP eine Zusammenarbeitsvereinbarung besteht, welche die bezahlungspflichtigen Zugriffsrechte und die Gratis-Zugriffsrechte der Kunden und die Abrechnung der Leistung und Nutzung zwischen LSP und ISP regelt.

Es wäre denkbar, dass in diesem Fall der Internet Services Provider (ISP) über seinen Hotspot (HS) oder Access Point (AP) ein Hosting bereitstellt und einige oder alle vor Ort notwendigen elektronische Bestell-, Bedienungs- und notwendigen Angebotsseiten und den Datentransfer zwischen Kunde und Local Services Provider (LSP).

Das ISIAM SSSS (Internet Services Integrated Aided Motivated Server Selling Services System) kann entweder direkt oder über den Provider betrieben werden, so dass die vor Ort stattfindenden Aktivitäten mit den Internet Services günstig beeinflusst werden könnten.

Das Verfahren kann mit folgenden Anwendungen erklärt werden:

### 1.Beispiel:

Heute können schon DECT-Telefone mit General Access Profile (GAP) benutzt werden. Diese sind heute weit verbreitet, können aber nur anschlussabhängig betrieben werden, indem diese an eine Basisstation oder dessen Zentraleinheit angemeldet werden und bei Benützung nur und ausschließlich anschlussabhängige Kosten verursachen.

Die Basisstation merkt wenn ein dort unangemeldetes Mobilteil sich meldet, kommuniziert mit diesem und nachdem die Identifikation manuell oder automatisch mit Hilfe von Guest Identification General Access Profile (GIGAP) erfolgte, wird das Mobilteil wunschgemäß verbunden und benutzerabhängig im LAN oder über das LAN abgerechnet.

Die Abrechnung kann aus im Voraus beim Provider eingezahlten Beträgen (Prepaid Karten) erfolgen, wobei die Benutzernummer oder Kartennummer mit PIN-Nummer abgefragt, kontrolliert und die verbrauchten Kosten abgezogen werden. Bei den automatischen Verfahren wird das bei den GSM-Systemen gut bewährte automatische Identifikations- und Abrechnungsverfahren verwendet.

### 2. Beispiel:

Das Verfahren kann auch im Rahmen eines so genannten Change- oder Share-Connection-Verfahrens verwirklicht werden, in dem alle organisierten Teilnehmer ihre Telekommunikationsanschluss-Einheit (TAE) für alle bei dem Tausch- und Anschlussüberlassungsverfahren organisierten oder nicht organisierten Teilnehmer öffnen und die erbrachten Leistungen nach Identifikation und Verbindung benutzerabhängig untereinander bzw. über den Anbieter abgerechnet werden.

Die Abrechnung kann auch so erfolgen, dass der jeweilige Teilnehmer bzw. sein Telekommunikationsanschluss-Einheit (TAE) mit den Kosten, welche er mobil unterwegs benutzerabhängig verbraucht hat, belastet werden. Dazu wäre es von Vorteil, dass die Basisstationen der Benutzer auch eine Identität durch eine SIM-Card oder anders bekommen, damit nicht nur der Anschluss durch seine Rufnummer identifiziert werden kann.

Für die Verbreitung kann es förderlich sein, eine GIGAP-fähige Basisstation vorzuschreiben, welche alle andere Teilnehmer mitbenützen können. Dann sorgt jeder, der über ein Festnetzmobil erreichbar sein möchte, auch gleichzeitig für GIGAP-fähige Basisstationen.

### 3. Beispiel:

Eine weitere vorteilhafte Anwendung des alternativen Mobil-Telekommunikationssystems (AMTS) und dessen Services ist der Wireless Selling Services (WSSS), bei dem der Kunde sich mit seinem Cordless Telecommunication Terminal (CTT) direkt in das LAN der Anbieter anmeldet und einbucht, um dann dort ohne Wartezeiten bestellen und sich bedienen lassen zu können. Die Anmeldung kann entweder manuell oder automatisch erfolgen. Man kann sich mit von den Hotspots bzw. Netzwerken bekannten manuellen Anmeldungsverfahren nicht zufrieden geben, wo der Username und PIN Code angegeben werden müssen, sondern es soll eine automatische Anmeldung ähnlich wie bei den GSM-Netzen mit Einbuchung bzw. Identifikationsverfahren beim alternativen Telekommunikationsverfahren erfolgen.

Die Bestellung bzw. das Auswählen der Ware kann durch Browsen oder einfach nur durch Sprache über das Voice Portal im LAN erfolgen, wozu auch ganz einfache Bluetooth-Headsets benutzt werden könnten. Das elektronische Bestell-und Bedienungsverfahren ähnelt dem herkömmlichen E-Commerce-Verfahren. Es unterscheidet sich darin, dass in unserem Falle die zu dem Verfahren notwendigen Geräte zwischen Anbieter und Kunde so bereit gestellt und programmiert sein müssen, dass diese in der Lage sind, die zur Bestellung und Vor-Ort-Bedienung der Ware bzw. Dienstleistungen, welche bestellt worden sind, auch vor Ort mit einer Art Live-Link bedient werden können.

### 4. Beispiel:

Man kann auch Fragen zu Informationen zu beliebigen Themen im LAN der Anbieter an sein Voice Portal stellen, wie z.B. wo findet man eine bestimmte Ware oder Dienstleistung. Außerdem kann man natürlich auch den LAN als mobiles Webtelefon benutzen, indem man das CTT, die Palmtops, Pocket PCs, PDAs etc. mit dazu geeigneter Software für den mobil VoIP versieht, so dass nicht nur die heimische Geräte, wie es heute der Fall ist, sondern alle beliebige fremden Geräte, Besucher im LAN oder über das LAN identifiziert, über den VoIP-Gateway und Gatekeeper verbunden und intern oder extern abgerechnet werden.

Als Vermittlungsstellen oder Zentralen können hierbei der Messenger und/oder aber auch beliebige Web-Dienste fungieren, aber auch beliebige PSTN-Vermittlungszentralen können die Vermittlungsaufgaben übernehmen.

### 5. Beispiel:

Weiterhin es gibt noch die Möglichkeiten, die CTT-Endgeräte so zu konfigurieren bzw. zu programmieren, dass Interessen oder Profile eingestellt werden können, und wenn man dann zum Beispiel an einem Restaurant oder Hotel vorbeiläuft oder -fährt, lässt sich das Angebot, das eingestellt ist und uns interessiert, in unserem CTT einblenden. Auf diese Art und Weise muss man in ein Hotel oder Restaurant erst gar nicht mehr hineingehen, um die aktuellen Angebote kennen lernen zu können, sondern es wird von dem Anbieter gratis zugeschickt.

Anschließend können natürlich beliebige Angebote genutzt, bestellt und gekauft werden. Diese einstellbaren Profile können auch dafür sorgen, dass im Falle einer erfindungsgemäßen Handy-Kombination, bei der die GSM- und/oder UMTS-Frequenzen mit den alternativen freien Frequenzen kombiniert werden, diese ständig überwachen, dass uns sowohl die Anrufer aus den GSM-Netzen als auch die Informationen aus Netzen mit den freien Frequenzen, die Angebote und Leistungen, Services der Anbieter erreichen. Diese kombinierten CTT-Geräte könnten mit einem so genannten Mobile Least Cost Router (M-LCR) ausgestattet sein, damit diese in der Lage sind, falls möglich die billigste freie Frequenz zu benutzen.

Mit dem Mobile Least Cost Router (M-LCR) ausgestattete CTT-Endgräte können auch, wenn diese unter ihrer Mobilfunknummer angerufen werden, aber auch in einem LAN mobil von unterwegs, aber trotzdem zu viel günstigeren Preisen, erreicht werden, wobei automatisch eine entsprechende Information für den Anrufer verschickt wird, damit er bei dem Anruf Kosten sparen kann.

### 6. Beispiel:

Es können auch die Geschäftsvorgänge und Bedienung der Kunden im Internet Services Integrated Aided Motivated /Server Selling Services System (ISIAM /SSSS) kombiniert werden, um mit Customer Relationship Management (CRM) im LAN noch wirkungsvoller betrieben zu werden. Dabei wird der Verkauf von waren und/oder die Nutzung von Dienstleistungen im Internet, Intranet oder von Telekom-Leistungen gratis belohnt, so dass die Kauflust gesteigert und sämtliche Vorgänge zwischen Anbieter und Kunde günstig beeinflusst werden.

### 7. Beispiel:

Die Anwendungen bzw. Verfahren können noch mit den verschiedensten Kunden-Bedienungssystemen eingesetzt und kombiniert werden, auch bei Bedienung verschiedenster Automaten, Parkautomaten, Einlass- und Ticketsysteme, indem man sich statt der bekannten Kontaktaufnahme über die Mobiltelefonprovider durch Anrufen einer bestimmten Nummer, direkt im LAN des Anbieters bzw. in dessen Geräte-Automaten mit dem eigenen CTT anmeldet, sich einbucht, und mit dem Anbieter gratis kommunizieren kann. Wie schon erwähnt, kann das alternative Mobil-Telekommunikationssystem (AMTS) bei jedem beliebigen Verkaufs- und Bedienungssystem eingesetzt werden, wo dadurch weniger Wartezeiten, eine bequemere und schnellere Bedienung auf der Post oder in Läden erreicht werden können.

Im Zusammenhang mit der Beschreibung der Anwendungen und ihren Voraussetzungen benützten Begriffe:
- AMTS: Alternatives Mobil-Telekommunikationssystem
- SUB: Subscriber, Teilnehmer, Abonnent
- TP: Telecommunication Provider, Dienstleister
- ESS: Electronic Several Services, beliebige elektronische Dienstleistungen
- ECC: Electronic Credit Card
- ISP: Internet Services Provider
- HS: Hotspot
- AP: Access Point, Zugangspunkt
- LSP: Local Services Provider, Lokale Dienstleister, Verkäufer, Händler
- ISIAM: Internet Services Integrated Aided Motivated
- SSSS: Server Selling Services System
- SERV: Server
- PROV: Provider, Dienstleiter
- PSTN: Public Switched Telecommunication Network, Öffentliches Telekommunikation Vermittlungsnetzwerk

M-VPN Mobile Virtual Privat Network ist ein Teil des Internets, in dem zwei oder mehrere mobile Teilnehmer sicherheitsrelevante Daten in einem geschützten Tunneling-Verfahren miteinander verbunden werden.

LAN Local Area Network. Diese Netzwerke können mit Leitungen und/oder ohne Leitungen in den lokalen Bereichen existieren. Wir betrachten jede beliebige Basisstation oder jeden Access Point, welcher mit mindestens einem einzigen CTT-Mobilteil verbunden ist als LAN-Netzwerk.

MAC ADRESS Die Media Access Control Adresse ist eine Identifizierungs- oder Authentifizierungsmöglichkeit, womit man in der Lage ist, über die genau definierte MAC-Adresse die Identifikation festzustellen und die Berechtigungen zu prüfen bzw. mit beliebigen Kennungen in Datenbanken zu verknüpfen.

SIM CARD Subscriber Identification Modul-Card ist ein Teilnehmer-Identifizierungskarte, welche in den GSM-Netzen weit verbreitet ist und die automatisches Einbuchen in die Mobilfunknetze ermöglicht. In den erfindungsgemäßen alternativen Netze (AMTS) ist dies mit den gleichen Zwecken übernommen.

PDA Personal Digital Assistenten können mit geeigneten Kommunikationsprogrammen zu Cordless Telecommunication Terminals (CTT) umgerüstet werden, welche in den LANs und über die LANs in der Lage sind, auf den freien AMTS-Frequenzen oder aber auch mit den GSM- und/oder UMTS-Frequenzen zu kommunizieren. Wenn diese mit Stand-by-Programmen ausgestattet werden, können diese überall in den LANs lokalisiert werden und über die AMTS-Basisstationen bzw. Access Points mit Hilfe einer zentralen Verwaltung und Betreibereinheit ein alternatives Telekommunikationssystem (AMTS) erschaffen, indem die mit AMTS-Kommunikationsprogrammen ausgestatteten und mit drahtlosen Kommunikationssystemen ergänzten PDAs in der Lage sind, automatisch mit den fremden und über die fremden LANs zu kommunizieren, Daten und Gespräche zu führen und entgegenzunehmen.

HANDYS Die Handys, welche heute schon mit Bluetooth-Chips hergestellt werden, müssen noch mit AMTS-Kommunikationsprogrammen ergänzt werden, damit sie ab sofort in der Lage sind, mit bzw. über die erfindungsgemäßen AMTS-Basisstationen zu kommunizieren.

Diese AMTS-Netze arbeiten genauso wie die Mobilfunknetze mit dem kleinen Unterschied, dass die beim erfindungsemäßen Verfahren in privaten Wohnungen, Geschäften und Lokalen der Teilnehmer aufgestellten Basisstationen benutzt werden, statt die in den Außenbereichen installierten Sendemasten.

AMTS Alternatives Mobil-Telekommunicationssystem. Zu den Eigenschaften der AMTS-Handys oder CTTs können wir feststellen, dass diese in der Lage sind, sich bei den geeigneten AMTS-Basisstationen und Access Points automatisch anzumelden, einzubuchen mit MAC Adresse oder mittels SIM-Cards, und sich mit den Basisstationen Access Points (AMTSD) mit Hilfe ihre Guest Identification General Access Profile (GIGAP) selber zu identifizieren oder zumindest so zu kommunizieren, dass dadurch keinerlei anschlussabhängige Kosten entstehen. Nur und ausschließlich benutzerabhängige Kosten entstehen, welche aber von den Teilnehmern selber getragen werden.

LCR Least Cost Router ist eine Software, welche sicherstellt, dass der Benutzer über die günstigsten Verbindungen verbunden wird.

MLCR Mobil Least Cost Router ist ein Endgerät, welches bei unseren Frequenzen zum Einsatz kommt, wobei ein geeignetes Programm ständig prüft, ob eine Verbindung auf den billigsten alternativen Frequenzen bereitgestellt werden kann oder ob die teureren GSM- und UMTS-Frequenzen, wegen mangelnden alternativen Verbindungsmöglichkeiten benutzt werden müssen.

Drive or Go Away to Know, wo der Kunde erst gar nicht in die Lokalitäten der Anbieter hineingehen muss. Schon wenn der Kunde vorbeigeht oder -fährt, bekommt er ständig Informationen, welche je nach eingestelltem Interessenprofile von Interesse sind, ob günstiges Essen, Schlafen oder beliebige andere Dienstleistungen von Interesse sind.

AMTS Alternatives Mobil-Telekommunicationssystem ist der Kern des Systems. Von diesem zweigen das Wireless Selling Services System (WSSS) und Voice Portal-Lösungen, Anwendungen im drahtlosen LAN der Anbieter vor Ort und Stelle ab, welche alle entweder mit Zustimmung der Mobilfunknetzbetreiber Frequenzen wie GSM- und/oder UMTS- oder ohne Zustimmung der Mobilfunknetzbetreiber ausschließlich mit den AMTS-Frequenzen (sämtliche lizenzfreie Frequenzen) betrieben werden können.

CTT ist das Cordless Telecommunication Terminal, das drahtlose Telekommunikations-Endgerät, welches ein beliebiges bekanntes oder unbekanntes Endgerät wie ein PDA, Schnurlostelefon, WebPads, Pocket Computer, Palm Computer sein kann, welcher fähig ist, im LAN oder über das LAN der Anbieter leitungsvermittelt oder paketorientiert Daten und Sprache zu kommunizieren.

CRM Customer Relationship Management oder kundenbezogenes Management wird zum registrieren und verwalten von kundespezifischen Informationen verwendet. Das neue dabei beim erfindungsgemäßen Verfahren ist, dass es im LAN des Anbieters im Rahmen des Customer Communication Management (CCM) verwendet und im WSSS integriert wird.

MOBILE DECT ist ein Teil des Verfahrens, bei dem sich in die DECT-LANs auch fremde, dort nicht angemeldete Endgeräte einbuchen können. Die Ad-Hoc-Anmeldung bzw. Einbuchung kann manuell und/oder automatisch erfolgen. Weil es automatisches DECT mit SIM-Card-Identifizierung zur Anmeldung zur Zeit noch nicht gibt, darf es als neu betrachtet werden. Bei den manuellen Verfahren sind beschränkt geöffnete Basisstationen vorgesehen, welche den Teilnehmer ohne anschlussabhängige Kosten zum Provider weiterleiten, wo dann Identifikation, Verbindung und Abrechnung erfolgen. Diese Beschränkungen können auf ganze Leitungen oder nur auf bestimmte Vorwahlen beschränkt werden, damit die 0800-er-Vorwahlen genutzt weren können und die 110 und 112 für jeden frei zugänglich bleiben.

MOBIL ISDN macht es möglich, dass über mobil organisierte private Zugangspunkte mit gegenseitiger Benützungsüberlassung für einen geschlossen Benutzerkreis bzw. Netzwerk eine alternatives mobiles Netzwerk mit den drahtlosen Festnetzverbindungen verwirklicht wird.

Die privaten Zugangspunkte werden als Basisstationen verwendet, indem sich alle Teilnehmer automatisch anmelden, sich Einbuchen können genauso wie bei den GSM-Netzen, und die Basisstationen oder der Access Point werden von den AMTS Mobilen Switching Center (MSC) zu dem AMTS Authentication Center (AC) weitergeleitet, kontrolliert, in dem AMTS Home Location Register (HLR) und AMTS Visitor Location Register (VLR) je nach Aufenthaltsort registriert und je nach Bedarf mit den gewünschten Netzen und dessen Teilnehmer verbunden, genauso wie in den GSM- und UMTS-Netzen.

In den mobilen ISDN-Netzen können die Roaming-, LBS- und beliebige andere Signal-Signalisierungen über die B oder D Kanäle der ISDN-Netzwerke oder aber auch über Internet erfolgen. Dabei können Kanäle je nach Provider beliebig kombiniert und ständig gewechselt werden.

LBS Location Based Services, Festnetz. Ortsabhängige Dienstleistungen sind genauso gut möglich, wenn den teilnehmenden Festnetz-Anschlüssen ein bestimmter geographischer Code je nach deren Lage und Koordinaten zugeteilt werden. Mit dieser einfachen kann auch im Festnetz eine LBS-Dienstleistung verwirklicht werden, welche dann ortsabhängig jeden Teilnehmer informiert, was ist in der Nähe zu finden ist.

Internet Service Provider Organised ISDN Roaming and Call Back Connected Telecommunication Procedure ist eine bereits verwirklichte Telekommunikations-Variante, bei der der Provider über Internet die Signalisierung der anzurufenden Nummer bekommt, worauf er die angegebene Teilnehmernummer ISDNleitungsvermittelt mit dem Anrufer verbindet, und das Entgelt für die Leistungen von dem bei ihm geführten Konten oder einem Guthaben abzieht bzw. abrechnet. Dieses Verfahren hat den einzigen Nachteil, dass es sich mobil von unterwegs mit dieser Ausführungsform leider nur mit den teueren Mobiltelefonen realisieren lässt. Diesen Nachteil kann das AMTS leicht beheben, indem der Benutzer seinen Erreichbarkeits-PIN und/oder MAC Adresse, LAN-Adresse bei der Internet-Kommunikation angibt, hinterlässt, und dem entsprechend wird der Rückruf, welcher die zwei oder mehrere Teilnehmer miteinander verbindet, genau zu dem Benutzer, welcher mobil unterwegs ist, adressiert und die Verbindungen und Gespräche können abgewickelt werden. Hierbei können zwei verschiede leitungsvermittelte und VoIP-Verfahren beliebig kombinier werden.

Der bekannte und beliebte Blackberry Service, welcher mit den GPRS-Diensten für einen ständig aktuellen E-Mail-Service sorgt, wurde auch in die erfindungsgemäßen LAN-Services integriert und wird LANberry genannt. Dieser hält die E-Mails der Server aktuell auf unseren CTT in den LANs wie bei Blackberry im GPRS.

LUM Like UMTS Mobile LAN Network Access Control Automatic Book In Procedure. Dies bedeutet, dass erfindungsgemäß das automatisches Einbuchungs- und Identifikationsverfahren von UMTS in unsere AMTS integriert wurde, damit die AMTS-Netze genauso einfach und rationell genutzt werden können, wie heute die GSM-Netze.

Das Verfahren und die dazu benötigten vorteilhaft Gerätschaften:

CTT Cordless Telecommunication Terminals können sämtliche Telekommunikations-Endgeräte sein, welche mit Bluetooth, DECT, DMAP mit GAP, Home - Radio Frequency, W-LAN nach IEEE 802.11x drahtlose benutzbar gemacht worden sind und sich heute nur manuell in die LANs anmelden und einbuchen können. Diese Geräte sind intelligenter, indem diese mit geeigneten Programmen automatisch ein Einbuchungs- und Identifizierungsprotokoll und individuell einstellbare Angebotsanforderungen und Empfängerfunktionen vorsehen, entsprechend den erwähnten, bekannten und verbreiteten Standards.

AMTSD Alternativ Mobile Telecommunication System Device ist eine spezifische Basisstationen und/oder Zugangspunkt, welcher in der Lage ist, für die Anwender eine Gratis-Verbindung bis zum Provider oder bis zur Telekommunikationsnebenstellenanlage herzustellen, wo dann die Identifikation, Verbindung und Abrechnung entweder intern oder extern erfolgt.

Die verfahrensgemäß gestalteten, programmierten und konfigurierten Engeräte und Zentralen:

Bei dem Verfahren werden Endgeräte, so genannte CTT-Geräte, verwendet, welche vorteilhaft auch mit anderen Verfahren (GSM, GPRS, UMTS) verwendet werden können. Diese Endgeräte werden jetzt auch für das alternative Netzwerk (AMTS) eingesetzt und in den LANs befähigt, Anrufe abzusetzen und entgegenzunehmen oder TCP/IP- oder VoIP-Verbindungen aufzubauen, zu erhalten und zu kommunizieren. Es können genauso wie bei den GSM-Systemen so genante Jackets and die PALMs, PDAs und Pockets angeschlossen oder direkt in die Geräte integriert werden.

Im Weiteren ist es auch möglich, beliebige vorhandene GSM-oder UMTS-Handys mit einem Frequenzkonverter zu verbinden, welcher die mit lizenzierten Frequenzen arbeiten Handys LANfähig machen, damit diese ohne Einschränkungen vollwertig eingesetzt und in den LANs zu dem Alternativen Mobile Telekommunikations- Verfahren (AMTS) zwischen Anbieter und Kunde und über den LAN zu beliebigen Kommunikationen benutzt werden können.

Eine weiter Ausgestaltungsform besteht darin, die CTTs so zu planen und zu bauen, zu konfigurieren und zu programmieren, dass diese sich von Anfang an für die Benützung mit AMTS in den LANs automatisch einbuchen und identifizieren.

Eine weitere vorteilhafte Ausführungsform besteht darin, die einfachen drahtlosen Headsets als AMTS-CTT-Endgeräte zu benützen, indem die Handys bzw. Telefonteile in die an den AMTS-Zugangspunkten angeschlossenen LAN-Server oder Telefonanlagen integriert werden. In diesem Fall werden auf dem Kopf getragene Lautsprecher und Mikrofon fähig, die direkte Kontaktaktaufnahme zwischen Anwender und Server-Kunde und Anbieter zu ermöglichen und in die LAN-Server integrierte Voice Portals, welche die Sprache erkennen und digital übersetzen und auswerten, könnten die verschiedensten Informations-, Anforderungs-und Bereitstellungs-Procederes gewährleisten und beliebige Einkauf-, Bestellungs-, Bedienungsvorgänge und beliebige Dienstleistungen abwickeln.

Bei den ankommenden Anrufen werden die MAC Adressen zu Identifikation und zu der Authentifikation die Stimme selber und oder PINs verwenden. Zum Anwählen einer bestimmten Nummer könnten die bekannten Voice Dial-Programme und -Verfahren verwendet werden.

Damit das AMTS-Verfahren schnell auf den Markt eingeführt werden kann, benützen wir auch die Super Thin Technology (STT) genannten und durch Drucken, Falten hergestellte billigste Wegwerftelefone, welche aber nicht weggeworfen werden müssen, da diese heute schon aufladbar sind. Über die Festnetze benutzbare Mobile Prepaid-Karten, welche auch gleichzeitig die AMTS-Mobiltelefone und -Basisstationen sind, können sich für nur 10, -€ inklusive 50 oder 100 Minuten Gesprächszeit sicher sehr gut verkaufen. Natürlich können die alternativen Frequenzen auch bei den Billiggeräten mit den Lizenzfrequenzen kombiniert werden und mit dem Mobile Least Cost Router (MLCR) ausgestattet werden, damit diese wenn möglich die günstigeren Frequenzen automatisch erkennen und nützen werden.

Zu dem Verfahren gehörende Basisstationen oder Access Points sind mit einem Guest Identification General Access Profile (GIGAP)-Module ausgerüstet, welches zwischen in die Heimnetze eingebuchten und an dem Anschluss nicht direkt zugelassenen Fremdgeräten unterscheiden kann, falls die auch über ein GIGAP-Modul verfügen. Die Fremdgeräte werden immer benutzerabhängig entweder intern oder extern in beliebiger Art und Weise identifiziert, mit Data- oder Sprachennetzen verbunden und abgerechnet. Außer den drahtlose Lösungen zu Telekommunikationseinheiten werden noch die notwendigen Router und Modems (CAPI) und/oder TAPI-Treiber in die LANs integriert.

Das Verfahren ist bei einer vorteilhaften Anwendung grundsätzlich dadurch gekennzeichnet, dass die in dem System organisierten Anschlüsse, welche in den privaten Wohnungen und/oder Geschäften, Läden, Lokalen oder Schulen etc. installiert werden und ihre drahtlosen Systeme mit beliebigen freien Frequenzen bereitstellen und für jeden Besucher, Kunden zugänglich sind, weil die Basisstationen genauso arbeiten wie die Basisstationen der Mobilfunknetze mit ihren vernetzten Zentralen. Demnach stehen in der Change Connection Community, oder Share Connection Community alle Anschlüsse den Teilnehmern auf Gegenseitigkeit offen. Bei dem Händler, Anbieter bzw. bei den Händlernetzen kann die Gegenseitigkeit auf Inanspruchnahme der angebotenen Waren und/oder Leistungen beschränkt werden.

Es ist auch möglich, einmal für die eigenen Anschlüsse erkaufte Leistungen wie DSL-Flatrate in die Sharing-Gemeinschaft hineinzubringen, um dann die eigenen gekauften Festnetzprodukte überall unterwegs nützen zu können.

Es können an einem einzigen DSL-Doublespeed-Anschluss mit der gleiche Geschwindigkeit gleichzeitig mindestens 24 Schmalband-Flatrate-Services versorgt werden, indem ab dem privaten Telefonanschluss über ein DSL-Modem und/oder Switches und/oder DSL Router mit einer Basisstation mit einer der lizenzfreien Frequenzen den Zugriff für unzählige Teilnehmer erlauben. Wenn wir die AMTS-Zugangspunkte sogar überwiegend mit den erfindungsgemäßen AMTS-Halbmobiltelefonen benützen, benötigt man viel weniger Datenverkehr und deshalb kann ein einziger Anschluss auch von 50, 100 oder mehr Teilnehmer genutzt werden.

Die Betreiber des Verfahrens verwalten alle Anschlüsse mit ihren geographischen Koordinaten und alle Teilnehmer mit ihrer eigenen Kennung, damit auch weltweites Roaming und Festnetz /Location Based Services (LBS) möglich sind.

Das Verfahren hat den Vorteil, dass wenn jemand seine eigenen Anschlüsse nicht selber nützt, allen anderen im Verfahren organisierten Teilnehmern seinen Anschluss zur Verfügung stellen kann. Dafür kann er dann auf Gegenseitigkeit alle anderen in dem Verfahren organisierten Anschlüsse mit benutzerabhängiger Kostenerfassung mobil unterwegs benützen.

Diese Gegenseitigkeit funktioniert natürlich auch zwischen den verschiedensten Firmen und Unternehmen bzw. zwischen ihren Kunden, mit den Unterschieden, dass beim Händler, Verkäufer und Dienstleister eher auf die für die Kunden gebotenen Vorteile, wie zum Festnetz mobil telefonieren zu können und/oder mit den GSM-Mobiltelefonen zu viel günstigeren Preisen telefonieren zu können. Dadurch kann der Kunde eine zur Kaufentscheidung notwendige Information günstig oder gratis über die LANs der Anbieter kommunizieren und der Händler bzw. Dienstleister profitiert aus dem beschleunigten zum Teil automatisierten Kundenbestellungs-, Informations- und Bedienungssystem und Kommunikationssystem im eigenen LAN vor Ort und Stelle und natürlich auch in den angeschlossenen LAN-Netzwerken.

Das AMTS kann außer Daten- und Telefonnetze auch beliebige andere Kabelnetze oder auch Stark- und Schwachstromnetze benutzen, wenn dazu die notwendige Software und Hardware ergänzt, zusammengeschaltet und konfiguriert wird.

Das Verfahren hat den Vorteil, dass mit viel niedrigeren Strahlungswerten viel einfachere und billigere Telekommunikationsverfahren mit den notwendigen Infrastrukturen erschaffen werden. Dies kann auch mit den superflachen Technologie, wie Drucken, Falten, Fertigen erfolgen, welche wegen ihre niedrige Herstellungspreise sofort als eine superbillige mobil Prepaid-Karte verkauft werden kann, welche gleichzeitig auch ein Telefon ist und die mit der Kombination der Festnetz und Mobiltelefonie von beiden Systemen die Vorteile genießt, bei gleichzeitiger Elimination der Nachteile.

Das Verfahren hat den Vorteil, dass damit ein sogenantes Station Sharing System (SSS) oder Connection Sharing Community (CSC) oder Change Connection Community (CCC) verwirklicht werden kann, in dem die TAE-Telekommunikations-Anschlusseinheiten der Teilnehmer gegenseitig zur vorübergehende Benützung bei benutzerabhängige Abrechnung überlassen werden. Dadurch kann man unter der eigenen heimischen Festnetznummer oder beliebiger Teilnehmerkennung überall in der Welt über die Festnetze zu Festnetzpreisen erreichbar sein.

Das Verfahren hat den entscheidenden und besonderen Vorteil, dass damit das aus dem Internet bekannte E-Commerce-Verfahren den Benutzern bekannt gemacht wird und deren Akzeptanz erhöht und die Benützungsweise kennen gelernt werden kann, indem bei den Anbietern On the Spot E-Commerce vor Ort und Stelle, elektronische Handelsanwendungen und Lösungen in der der realen Welt eingesetzt werden können.

Händler, Dienstleister, beliebige gewerbliche Anbieter können damit eine Customer Communication Connection (CCC) oder Services (CCS) betreiben und einen direkten Draht zu ihre Kundschaft aufbauen, womit die mit einer Art mobiler Customer Relationship Management (CRM) im eigenen und allen angeschlossenen LANs schaffen können und damit ihre Kunden besser kennen, binden, halten, bedienen, informieren, werben und verwöhnen können.

Mit AMTS besteht die Möglichkeit sämtliche Festnetz- und Mobilfunknetz-Services zu verwirklichen, aber diesmal auf diese neue Festnetzmobile Art. Diese Angebote können alle bekannte E-Commerce- und aber auch alle M-Commerce-Angebote sein, wie z.B. Preisvergleiche mit Location Based Services, Navigationshilfen über Informationen, wo finde ich die Ware oder Dienstleistung. Rabatangebote in der Nähe oder direkt in ihren WLAN standortbezogene "Gelbe Seiten", Geldbörsenfunktionen in allen angeschlossenen Betrieben und ein Rechnung für alle Dienste in den Alternativ Mobile Telecommunication System & Services (AMTSS)-Bereichen. Sowie Ein-Klick-Einkauf oder Bestellungsfunktionen.

Für AMTS sind die Anwendungsmöglichkeiten schier unerschöpflich, womit man in naher Zukunft sehr effektiv Personalkosten einsparen, Wartezeiten vermeiden und Kauf- bzw. Verkaufsvorgänge trendgerecht gestalten kann. Unter Anderem können AMTS-Anwendungen bei Tankstellen, Parkplätzen, Parkhäusern, Kaufhäusern, Hotels, Restaurants, Messen, Check-In, Check-Out, Abrechnungen angewendet werden.

Zusammenfassend betrifft die Erfindung ein Verfahren zur Schaffung eines Alternativ Mobile Telekommunikation Systems mit der Verwendung der bekannten DECT- und oder DMAP-Telekommunikationsendgeräte, welche bisher nur in den bestimmten heimischen Netzwerken Zugang gehabt haben und mit den bzw. über die Basisstation kommunizieren konnten, in denen die angemeldet waren. Bei dem Verfahren wird die Basisstation mit der dazu geeigneten Konfiguration, Hard- und Software so beschaffen, dass die genannte Telekommunikations-endgeräte mit den drahtlosen Telekommunikationsübertragungsgeräten oder Vermittlungszentralen innerhalb oder außerhalb eines Hauses zwecks Kommunikation, Identifikation, Verbindung und Abrechnung verbindbar und mobil kommunikationsfähig sind.

Das Verfahren kann ein in den oder über die lokalen Netzwerke (LAN) verbundenes DSL (Digital Subscriber Line) und oder SDL (Several Digital Lines) -Netzwerk sein, das mit beliebigen angeschlossenen Verkaufs-Dienstleistungen oder anderen Dienstleistungen ergänzt, kombiniert, vervollständigt wird.

Das Verfahren kann in den oder über die Lokalen Netzwerken (LANs) abgewickelte Vorgänge mit beliebigen Anbietern, Providern, Betreibern, Leistungen und mit Anschlusstausch organisierenden Betreibern und dessen Dienstleistungen ergänzen, kombinieren, vervollständigen.

Bei dem Verfahren benützen die Anwender beim Kaufen, Bestellen und bei Bedienungsleistungen ihre beliebige Telekommunikationsendgeräte (TCC) mit Hilfe der Customer Communication Services (CCS), so dass sie durch Sprechen, Browsen oder Code-Eingeben abhängig davon welche Leistungen sie in Anspruch nehmen möchten, Ware oder Dienstleistung auswählen, bestellen, bezahlen, oder nur Informationen über zur Verfügung stehende Waren oder Dienstleistungen, Warenauffindungshilfe oder Wareninfo oder Kauf, Bestellung, Bedienung, Identifikation, Ticketverkauf, Berechtigung, Befähigung oder Benützung von Einlasssystemen benutzen.

Bei dem Verfahren können die CTT-Telekommunikationsendgeräte mit einem Stand-by-Programm und gleichzeitig mit geeigneten Kommunikationsprogrammen ausgerüstet werden, welche es ermöglichen, dass die CTTs bzw. dessen Benützer über die Access Points und Netze über eine zentrale Vermittlung, Steuerung, Verwaltung und Betreibungseinheit kommunizieren und dadurch Anrufe identifiziert und abgerechnet werden.

Bei dem Verfahren können in dem AMTS-System organisierte Basisstationen, von den im System organisierten CTT-Endgeräten als eine öffentlich erreichbare und verwendbare Transceiver-Übertragungs-Stationen benutzt werden, welche wiederum mit den im System organisierten LANs und Vermittlungszentralen in Verbinddung treten können bzw. damit vernetzt sind.

Bei dem Verfahren bildet ein Station Sharing System (SSS) einen Anschluss oder eine Station zur vorübergehende Benützung als Überlassungs-Tauschsystem, welches sicherstellt, dass von unterwegs und/oder auch im Ausland unter der heimischen Rufnummer, dem heimischen Code oder der heimischen Teilnehmerkennung das AMTS-LANs erreichbar ist.

Bei dem Verfahren kann im Falle eines Mobil-VoIP und/oder Mobil-ISDN Dienstleistungs-Services der Teilnehmer bzw. dessen CTT-Endgerät über die angeschlossenen LANs an eine zentrale Verwaltungs- und Vermittlungsstelle eine Signalisierung schicken, wo er sich gerade befindet, und welche Rufnummer oder welchen Rufnummern oder Teilnehmerkennung/Teilnehmerkennungen er erreichen möchte.

Bei dem Verfahren kann, wenn ein Teilnehmer uns erreichen will, die Anrufe, Nachrichten, Sendungen über die Vermittlungsstellen in die AMTS-LANs geleitet werden, wo sich der Angerufene aufhält und im LAN lokalisiert und mit Mobile-ISDN leitungsvermittelt oder paketorientiert mit Mobile-VoIP verbunden wird und die Verbindungsarten beliebig gewechselt werden.

Bei dem Verfahren kann man, wenn man aus dem LAN oder Intranet nicht herauskommt, sich auch die gleichen Dienstleistungen anbieten bzw. generieren lassen, wie Surfen, Teilnehmerkommunikation in Kennenlern-Lokalen, Discos etc. oder in Vergnügungsparks, wo als eine Attraktion ein Benützungs-Koordinator die Besucher- bzw. Benützerströme lenkt, damit der ganze Betrieb computergesteuert ohne nennenswerte Wartezeiten organisiert wird.

Bei dem Verfahren kann man beim AMTS-Verfahren die Inhalte von SMS, Nachrichten, E-Mails des CTT-Endgerätes jederzeit automatisch mit den angeschlossenen Kommunikationsserver updaten oder aktuell gehalten werden, genauso wie es bei den GPRS-Netzen mit Blackberry der Fall ist.

Bei dem Verfahren kann die Einbuchung bzw. Anmeldung der CTT-Endgeräte in die drahtlose LANs der Anbieter programmgesteuert automatisch erfolgen und die Verbindungen beliebig mit den verschiedensten angeschlossenen Partnern oder ISP- oder Hotspot-Anbietern kombiniert werden.

Die bei dem Verfahren verwendete CTT-Endgeräte können schon vorhandene Endgeräte sein, welche in der Lage sind, die in unseren AMTS-LANs benutzten Frequenzen und Verfahren für einen Anruf oder beliebige andere digitale Daten entgegenzunehmen, zu tätigen oder zu senden.

Die mit GSM und oder UMTS kombinierten AMTS-CTT-Endgeräte können einen Mobile Least Cost Router (M-LCR) haben, welcher immer die billigste zur Verfügung stehende Verbindung realisiert, kontrolliert, aufbaut.

Die bei dem Verfahren verwendete AMTS-CTT-Endgeräte und auch die Basisstationen oder Access Points können aus Super Thin Technology (STT) gedruckt und gefaltet hergestellt werden.

Bei dem Verfahren werden im Falle einer Festnetz-Mobil-ISDN-Dienstleistung die einzelnen (CTT) Geräte in dem LAN oder über die LANs in einer zentralen Vermittlungszentrale erfasst, geführt, registriert oder verwaltet, damit bei einem Anruf oder Mail in den aktuellen LANs, wo die sich gerade eingebucht haben und sich aufhalten gefunden, verbunden und abgerechnet werden können.

## Patentansprüche

1. Alternativ Mobil Telekommunikations- System um damit ein elektronische Bestellung und Bedienung unterstützendes, automatisiertes Telekommunikation System zu verwirklichen, bei dem drahtlose Telekommunikations-Endgeräte (CTT) zur lokalen Nutzung mit mindestens einer Basisstation über ein lokales Netzwerk LAN kommunizieren, bei dem die mindestens eine Basisstation über eine Telekommunikationsleitung mit einem Telekommunikationsanbieter verbunden ist, um Dienste des Internets zu nutzen, bei dem das jeweilige drahtlose Telekommunikationsendgerät (CTT) vor der Kommunikation an der Basisstation angemeldet wird, bei dem für einen nicht in dem Lokalen Netzwerk (LAN) registrierten Benutzer ein elektronisches Kauf-, Bestell- oder Bedienverfahren abgewickelt wird, wenn der fremde Benutzer sich mit seinem drahtlosen Telekommunikationsendgerät (CTT) in das lokale Netzwerk (LAN) eines Anbieters einbucht und einen bidirektionalen Kommunikationskanal bekommt, bei dem das lokale Netzwerk (LAN) für den fremden Benutzer geöffnet wird und er einen digitalen Zugriff bekommt, bei dem der Benutzer mit seinem Telekommunikationsendgerät (CTT) eine Ware oder Dienstleistung bestellt und den zu zahlenden Preis mittels eines über das lokale Netzwerk (LAN) Benutzerabhängig geführten Kontos bezahlt oder abbuchen lässt, bei dem die Ware oder Dienstleistung anschliessend entweder über einen Automaten oder oder mit persönlichen Diensten zugestellt bzw. ausgehändigt wird, **dadurch gekennzeichnet, dass** der Benutzer über das Internet ein Zeichen oder Signal schickt für den Internet-Service-Provider oder beliebige andere Telekommunikationsprovider in dem er die gewünschte ein oder mehrere Telefonnummern oder andere beliebige Identifikationsmerkmale angibt, mit welche er verbunden werden möchte, weiterhin auch automatisch oder manuell seine Erreichbarkeit mitteilt und der Provider die gewünschte Verbindung entweder paketvermittelt VoIP oder leitungsvermittelt durchführt und dem Teilnehmer die Verbindungen, Anrufe weiterleitet.

2. Alternativ Mobile Telekommunikations- System nach Anspruch 1 **dadurch gekennzeichnet, dass** es mit jede beliebige Verkauf und KundenBedienungssystemen Automaten kombiniert eingesetzt und **dadurch** die Bedienung mit e-commerce vor Ort und Stelle der Verkauf, Bestellung und Bezahlung automatisiert wird.

3. Alternativ Mobile Telekommunikations- System nach Anspruche 1 und oder 2 **dadurch gekennzeichnet, dass** die Anmeldung der Benutzers in den lokalen drahtlosen Verkaufs-Netzwerken WLAN **automatisch** aufgrund elektronisch gespeicherter Kodes oder Signaturen, insbesondere aufgrund einer SIM-Karte, MAC-Adresse und/oder Sprachsteuerung voice control, durchgeführt wird.

4. Alternativ Mobile Telekommunikations- System nach Anspruch 1 bis 3 **dadurch gekennzeichnet, dass** die Anschlüsse zur vorübergehende Nutzung Überlassung Tauschsystem in einem SSS (Station Sharing System) gebildet wird und im Rahmen eines so genannten CCC Change Connection Community oder SCC Share Connection Community System, in dem alle organisierten Teilnehmer ihre TAE Telekommunikationsanschluss Einheiten für alle in dem Tausch und **Anschlussüberlassung** Verfahren organisierten oder nicht organisierten Teilnehmer ihre Anschlüsse öffnen überlassen und die erbrachten Leistungen nach Identifikation und Verbindung Benutzerabhängig untereinander, bzw. über den Anbieter abrechnen.

5. Alternativ Mobil Telekommunikation System nach Anspruche 1 bis 4 **dadurch gekenzeichnet, dass** die für die eigenen Anschlüssen erkauften Leistungen wie DSL Flatrate in die die Sharing Gemeinschaft hineinbringen, um dann die eigene gekaufte Festnetzprodukte überall unterwegs nutze zu können in eine so genannte SSS Station Sharing System CSC Connection Sharing Community oder CCC Change Connection Community verwirklicht werden kann, in dem die TAE Telekommunikations-Anschlusseinheiten der Teilnehmer zur vorübergehende Benützung bei Benutzerabhängige Abrechnung überlassen werden.

6. Alternativ Mobil Telekommunikation System und Dienstleistungen nach Anspruche 1 bis 5 **dadurch gekenzeichnet, dass** die CTT Cordless Telecom Terminals Endgeräte so konfiguriert und programmiert werden, dass Interessen und **Profile** eingestellt werden können und lässt das Angebot was wir eingestellt haben in unsere CCT über WLAN einblenden.

7. Alternativ Mobil Telekommunikation System und Dienstleistungen nach Anspruch 1 bis 6 **dadurch gekenzeichnet, dass** die Bezahlung der Waren und Dienstleistungen direkt über die drahtlose Local Area Netzwerke der Anbieter vor Ort und Stelle mit den Anbieter WLANs kommunizierende drahtlose Telekommunikations-Endgeräten der Kunden und oder direkt von dem Bargeldkarten-Chip bzw. Guthabenwertspeicher der CTT (Cordless Telecom Terminal) bzw. auf dessen **gespeicherten Werten** abgewickelt wird.

8. Alternative Mobile Telekommunikation System nach Anspruch 1 bis 7 **dadurch gekennzeichnet, dass** ein **Mobiles VoIP** Services verwirklicht wird, in dem die CTT (Cordless Telecom Terminals) Endgeräte in einem WLAN (Wireless Local Area Network) sich als fremde Benutzer sich anmelden und in dem LAN oder ausserhalb des LANs verwaltet registriert werden, damit bei eine eventuelle Anruf der Benutzer gefunden und verbunden werden können und während der Verbindung es können die Leitungsvermittelte und VoIP Verfahren vorteilhaft beliebig gewechselt werden.

9. Alternative Mobile Telekommunikation System nach Anspruch 1 bis 8 **dadurch gekennzeichnet, dass** ein **M-LCR- Mobile Least Cost Router** eine niedrigste Kosten Verbindung suchende Software, stellt sicher, dass der Benutzer statt GSM oder UMTS über die günstigeren WLAN Frequenzen verbunden werden.

## Claims

1. Alternatively, mobile telecommunications system to an electronic ordering and service support, automated telecommunications system to achieve the cordless telecommunications terminals (CTT) for local use, with at least one base station over a local area network LAN communicate, in which at least one base station on a telecommunications line with a telecommunications provider is connected to the Internet services, where the respective cordless telecommunications terminal equipment (CTT) before the communication with the base station, where for a not in the local area network (LAN) registered user of an electronic purchase -- Order or Bedienverfahren settled when the foreign users with its cordless telecommunications terminal equipment (CTT) in the local area network (LAN), a provider einbucht and a two-way communication channel gets in the local area network (LAN) for foreign users open and he gets a digital access, in which the user with its telecommunications terminal equipment (CTT) a product or service ordered and the price to be paid by one on the local area network (LAN) led Depending user account can be debited paid or where the goods or Service then either a machine or personal services or delivered or issued, wherein users of the Internet is a sign or signal to send to the Internet service provider or any other telecommunications provider in which he requested one or more Telephone numbers or any other identifiers indicating, with which he wishes to be connected continue to automatically or manually its accessibility and size of the provider the desired connection either packet-switched VoIP or circuit-switched and the participants carry out the links, forward calls.

2. Alternatively, mobile telecommunications system according as recited in claim 1 wherein it with any sales and customer service systems and machines used in combination to the operation of e-commerce on the ground and place of sale, ordering and automated payment.

3. Alternatively, mobile telecommunications system according as recited in claims 1, or 2 wherein the notification of the user in the wireless local sales networks WLAN automatically because of electronically stored codes or signatures, in particular due to a SIM card, MAC address and / or voice control voice Control, will be completed.

4. Alternatively, mobile telecommunications system according to as recited in claim 1 to 3 wherein the connections to use temporary assignment in a barter system SSS (station Sharing System) is formed and within the framework of a so-called CCC Change Connection community or SCC Share Connection community system in which all participants organised their TAE telecommunications access for all units in the exchange and transfer port procedures organised or otherwise participants leave open its ports and the services provided for identification and connection among users, depending, or the provider of payroll.

5. Alternatively, mobile telecommunications system as recited in claims from 1 to 4 this that for their own connections erkauften services such as DSL flat rate in the Sharing Community hineinbringen, then purchased their own fixed network products for use anywhere on can be placed in a so-called SSS station CSC Sharing System Connection Sharing community or CCC Change Connection community can be achieved, in which the TAE telecommunications connection units of the participants for temporary use at user-related settlement made available.

6. Alternatively, mobile telecommunications system and services to claims as recited in claim 1 to 5 by that the CTT Cordless Telecom terminal devices configured and programmed to ensure that interests and profiles can be set and can offer what we have in our CCT Wireless Show.

7. Alternatively, mobile telecommunications system and services, according to claim 1 to 6 by gekenzeichnet that the payment for the goods and services directly over the wireless local area networks of suppliers spot with the communicating provider WLAN wireless telecommunications terminals and the customer or directly from the Cash cards or credit-chip memory of the value of CTT (Cordless Telecom terminal) and stored on its values is settled.

8. Alternative Mobile Telecommunications System according to claim 1 to 7 wherein a mobile VoIP services is achieved in which the CTT (Cordless Telecom terminals) terminals in a WLAN (Wireless Local Area Network) as foreign users to register and to the LAN or outside the LAN managed to be registered so that any call and found the user can be connected during the connection and it can Leitungsvermittelte and VoIP procedures as beneficial to be changed.

9. Alternative Mobile Telecommunications System according to claim 1 to 8 wherein an M-LCR-Mobile Least Cost a router seeking lowest cost connection software, ensures that the user instead of GSM or UMTS on the lower frequencies WLAN connected.

## Revendications

1. Télécommunications mobiles systéme de communication afin que le système électronique de commande et un service de soutien, système automatisé de télécommunications à réaliser lors de la communication sans fil, terminaux de télécommunications (CTT) pour l'utilisation locale d'au moins une station de base via un réseau local LAN de communiquer dans laquelle au moins une station de base télécommunications, une ligne de communication avec un opérateur de télécommunications est connecté à l'Internet pour fournir des services à utiliser dans le sans fil leur appareil de télécommunications (CTT) avant la communication de la station de base, dans laquelle un pas dans le réseau local (LAN), un utilisateur enregistré d'achat électronique -- Commande ou Bedienverfahren déroule lorsque l'utilisateur se étrangers sans fil avec son appareil de télécommunications (CTT) dans le réseau local (LAN) einbucht un fournisseur et un canal de communication bidirectionnel reçoit, dans lequel le réseau local (LAN) pour les utilisateurs étrangers ouverts et il obtient un accès numérique à l'utilisateur avec son appareil de télécommunications (CTT) une marchandise ou du service commandé et le prix à payer sur le moyen d'un réseau local (LAN), l'utilisateur paie en fonction dirigées compte peut être débité ou dans laquelle les biens ou les Soit par service, puis un automate ou services ou avec des personnels est délivré et remis, **caractérisé en ce que** l'utilisateur sur l'Internet est un signe ou envoie des signaux pour les fournisseurs de services Internet ou tout autre fournisseur de télécommunications dans lequel il a souhaité une ou plusieurs Numéros de téléphone ou toute autre caractéristique d'identification indiquant, avec qui il veut être de continuer automatiquement ou manuellement communique ses coordonnées et le fournisseur de la connexion de circuits ou de paquets VoIP par le participant et les connexions, les appels-ci.

2. Télé-communications mobiles systéme selon la revendication 1 **caractérisé en ce que**, avec toutes les ventes et d'utilisation de systèmes automatiques et donc à combiner l'utilisation de e-commerce sur le terrain et de la vente, la commande et le paiement est automatisé.

3. Télécommunications mobiles de communication système de revendication et de 1 ou 2 **caractérisé en ce que** la demande de l'utilisateur local sans fil dans les réseaux de vente sans fil stockées automatiquement par voie électronique en raison de signatures ou de codes, en particulier en raison d'une carte SIM, adresse MAC et / ou vocale voice contrôle est effectué.

4. Télé-communications mobiles systéme selon la revendication 1 à 3, **caractérisé en ce que** les raccordements à la mise à disposition temporaire d'utilisation d'un système d'échange SSS (Station Sharing System) est faite dans le cadre d'un soi-disant communauté Change Connection CCC ou SCC ShareConnection Community System, dans lequel organisée tous les participants de télécommunications TAE port de communication pour toutes les unités dans le port d'échange et de mise à disposition des procédures, organisée ou non organisée participants d'ouvrir leurs ports, et les prestations fournies par l'identification et de connexion entre les utilisateurs en fonction, ou par le fournisseur de facturer.

5. Système de télécommunications mobiles de 1 à 4 revendications gekenzeichnet ainsi que les raccordements erkauften ses propres services tels que l'ADSL à taux de partage de la communauté hineinbringen, pour ensuite leur propre réseau fixe de produits achetés partout en profite pour une soi-disant système de partage de SSS Station CSC Connection Sharing Community Change Connection CCC ou communauté ne peut être réalisé, dans lequel les télé-communications TAE unités de raccordement d'abonnés pour l'utilisation temporaire d'utilisateur en fonction du décompte être.

6. Système de télécommunications mobiles et de services revendications 1 à 5 en gekenzeichnet que la CTT Cordless Telecom terminaux de terminaux est configuré et programmé, que les intérêts et les profils peuvent être et ne l'offre que nous avons placés dans notre CCT Carte sans fil.

7. Système de télécommunications mobiles et de services selon la revendication 1 à 6 en gekenzeichnet que le paiement des biens et des services directement sur le réseau local sans fil, les réseaux des opérateurs sur le terrain et avec le fournisseur de réseau sans fil communicants sans fil, terminaux de télécommunications et de la clientèle ou directement par le Argent comptant ou carte de crédit à puce mémoire de la valeur CTT (Cordless Terminal Telecom) ou des valeurs enregistrées sur son déroulement.

8. Système de télécommunications mobiles selon la revendication 1 à 7, **caractérisé par** un service de VoIP mobile est réalisé dans lequel la CTT (Cordless Telecom terminaux) dans un terminal sans fil (Wireless Local Area Network) en tant que tiers et les utilisateurs se connectent sur le réseau local ou géré en dehors du LAN sont enregistrés pour un éventuel appel à l'utilisateur de trouver et peuvent être associés pendant le mariage et il est possible de la procédure et VoIP Leitungsvermittelte salutaire volonté d'être changée.

9. Système de télécommunications mobiles selon la revendication 1 à 8, **caractérisé en ce que** M-Mobile-LCR Least Cost Router un faible coût de connexion du logiciel de recherche, s'assure que l'utilisateur plutôt que le GSM ou l'UMTS, WLAN favorable sur les fréquences sont reliés entre eux.
